# EUROPEAN PATENT APPLICATION

(11) **EP 4 782 327 A1**
(43) Date of publication of application: **29.07.2026**
(21) Application number: 25224483.5
(22) Date of filing: 17.12.2025
(51) Int. Cl.: B63H 20/00, B63H 21/17, B63H 23/24, B63B 79/10

(54) **BOAT PROPULSION DEVICE**

(30) Priority: 16.01.2025 JP 2025005872
(71) Applicant: Yamaha Hatsudoki Kabushiki Kaisha, Iwata-shi, Shizuoka 438-8501 (JP)
(72) Inventor: Suetake, Keiichi, Iwata-shi, Shizuoka, 4388501 (JP); Takeda, Kentaro, Iwata-shi, Shizuoka, 4388501 (JP)
(74) Representative: Grünecker Patent- und Rechtsanwälte PartG mbB

(57) **Abstract**

The boat propulsion device includes a propeller, an electric motor, a controller, and a communication device. The electric motor rotates the propeller. The electric motor includes a rotor including permanent magnets, and a stator that includes a plurality of coils arranged along a rotation direction of the rotor and that faces the rotor in a radial direction of the rotor. The controller controls driving of the electric motor. The controller includes a memory. The communication device communicates with an external device. The controller receives a correction request from the external device via the communication device, and rewrites correction values of electrical angles of current flowing through the plurality of coils, which are stored in the memory, based on the correction request.

## Description

The technology disclosed in this specification relates to a boat propulsion device and a boat.

A known boat propulsion device includes a propeller and an electric motor that rotates the propeller. The electric motor has a rotor including permanent magnets and a stator including a plurality of coils. (See, for example, JP 2022-018647 A).

Patent Document 1: Japanese Unexamined Patent Application Publication No. 2022-018647

There is a demand for rewriting correction values of electrical angles of an electric motor by a simple method in a boat propulsion device.

This specification discloses a technology capable of solving the above-described problem.

The technology disclosed in this specification can be achieved, for example, as the following aspects.
(1) A boat propulsion device disclosed in this specification includes a propeller, an electric motor, a controller, and a communication device. The electric motor rotates the propeller. The electric motor includes a rotor that includes permanent magnets, and a stator that includes a plurality of coils arranged along a rotation direction of the rotor and faces the rotor in a radial direction of the rotor. The controller controls driving of the electric motor. The controller includes a memory. The communication device communicates with an external device. The controller receives a correction request from the external device via the communication device, and rewrites correction values of electrical angles of current flowing through the plurality of coils, which are stored in the memory, based on the correction request. According to the boat propulsion device, the correction values of the electrical angles of the electric motor can be rewritten by a relatively simple method.
(2) In the above boat propulsion device, the controller may rewrite the correction values provided that the external device satisfies an authentication condition. According to this configuration, the correction values of the electrical angles of the electric motor are prevented from being rewritten by a tool other than a dedicated tool.
(3) In the above boat propulsion device, the controller may rewrite the correction values provided that the rotation of the electric motor is in a stopped state. According to this configuration, a malfunction of the electric motor during operation of the electric motor is suppressed.
(4) In the above boat propulsion device, the controller may transmit a completion signal to the external device when the correction values are rewritten. According to this configuration, it is easy for the user to confirm that the rewriting the correction values of the electrical angles of the electric motor is completed.
(5) In the above boat propulsion device, the controller may receive input values entered by a user from the external device, and may rewrite the correction values based on the input values. According to this configuration, the correction values of the electrical angles of the electric motor can be rewritten by a relatively simple method.
(6) In the above boat propulsion device, the controller may maintain the correction values immediately before the correction request is received when the input values are out of a reference range. According to this configuration, the accuracy of the correction values of the electrical angles after the completion of rewriting is improved.
(7) In the above boat propulsion device, when the rewriting of the correction values is stopped, the controller may transmit different signals for different causes of the stop to the external device. According to this configuration, when the rewriting the correction values of the electrical angles is stopped, it is easy for the user to confirm a cause of the stop of the rewriting the correction values of the electrical angles.
(8) In the above boat propulsion device, the memory may store initial values of the correction values. According to this configuration, deterioration in performance of the electric motor when the rewriting of the correction values of the electrical angles is stopped is suppressed.
(9) In the above boat propulsion device, the controller may receive a read request from the external device via the communication device, and transmit current values of the correction values stored in the memory to the external device based on the read request. According to this configuration, the user can easily check the current values of the correction values of the electrical angles.
(10) The above boat propulsion device may further include a sensor that detects positions of the coils. According to this configuration, the correction values of the electrical angles of the electric motor can be rewritten by a relatively simple method.
(11) In the above boat propulsion device, the rotor may be a tubular body and include a plurality of permanent magnets arranged along a rotation direction of the rotor, and the stator may be a tubular body and cover the rotor. According to this configuration, the correction values of the electrical angles of the electric motor can be rewritten by a relatively simple method.
(12) In the above boat propulsion device, the rotor may cover the propeller and may be connected to the propeller. According to this configuration, the correction values of the electrical angles of the electric motor can be rewritten by a relatively simple method.
(13) A boat disclosed in this specification includes a boat body and the boat propulsion device according to any one of (1) to (12) which is attached to a rear portion of the boat body. According to the boat, the correction values of the electrical angles of the electric motor can be rewritten by a relatively simple method.
(14) Another boat propulsion device disclosed in this specification includes an electric motor, a controller, and a communication device. The electric motor includes a rotor that includes permanent magnets, and a stator that includes a plurality of coils arranged along a rotation direction of the rotor and faces the rotor in a radial direction of the rotor. The controller controls driving of the electric motor. The controller includes a memory. The communication device communicates with an external device. The controller receives a correction request from the external device via the communication device, and rewrites correction values of electrical angles of current flowing through the plurality of coils, which are stored in the memory, based on the correction request. According to the boat propulsion device, the correction values of the electrical angles of the electric motor can be rewritten by a relatively simple method.

Note that the technology disclosed in this specification can be realized in various forms, and can be realized in a form of, for example, a boat propulsion device, a boat including a boat body and a boat propulsion device, and a method of manufacturing the same.

According to the technology disclosed in this specification, correction values of electrical angles of an electric motor may be rewritten by a relatively simple method.

### BRIEF DESCRIPTION OF DRAWINGS

FIG. 1 is a perspective view illustrating a configuration of a boat according to an embodiment.
FIG. 2 is a side view illustrating a configuration of an electric propulsion device.
FIG. 3 is a top view illustrating the configuration of the electric propulsion device.
FIG. 4 is an explanatory diagram illustrating a configuration of a drive unit.
FIG. 5 is a block diagram illustrating a control configuration of the electric propulsion device.
FIG. 6 is a flowchart illustrating a method of rewriting correction values of electrical angles.
FIG. 7 is a diagram illustrating an example of a correction value confirmation screen displayed on an external device.
FIG. 8 is a diagram illustrating an example of a correction value rewriting screen displayed on the external device.

### DESCRIPTION OF EMBODIMENTS

### Embodiment

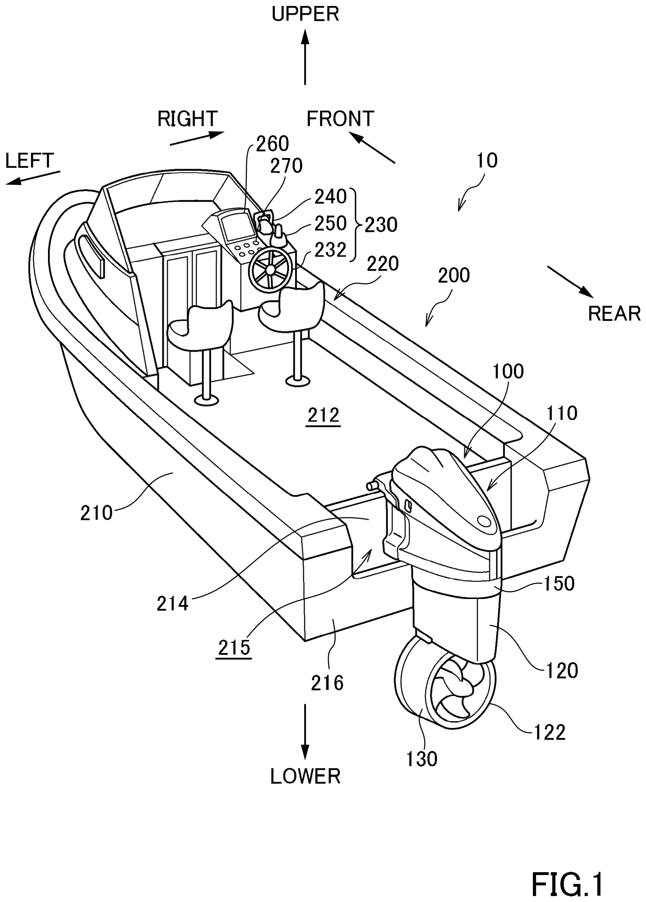

FIG. 1 is a perspective view illustrating a configuration of a boat 10 according to the embodiment. In FIG. 1 and other drawings described later, arrows indicating individual directions with reference to a position of the boat 10 may be illustrated. Specifically, in the individual drawings, arrows indicating front (FRONT), rear (REAR), left (LEFT), right (RIGHT), upper (UPPER), and lower (LOWER) directions may be illustrated. A front-rear direction, a left-right direction, and an up-down direction (vertical direction) are orthogonal to each other.

The boat 10 includes a boat body 200 and an electric propulsion device 100. The electric propulsion device 100 is an example of a boat propulsion device.

The boat body 200 is a portion of the boat 10 on which an operator (passenger) rides. The boat body 200 includes a boat main body 210, a pilot seat 220, an operation device 230, a display device 260, and an input device 270.

A living space 212 is formed in the boat main body 210. The pilot seat 220 is installed in the living space 212. The boat body 200 further includes a partition wall 214 and a transom 216. The partition wall 214 defines a rear side of the living space 212. The transom 216 is located at a rear end of the boat body 200. A space 215 is present between the transom 216 and the partition wall 214 in the front-rear direction.

The operation device 230 is provided for steering. The operation device 230 accepts operations of the operator. The operation device 230 is installed near the pilot seat 220. The operation device 230 includes a steering wheel 232, a shift/throttle lever 240, and a joystick unit 250. The steering wheel 232 is a device for steering the boat 10. The shift/throttle lever 240 is a device for performing a shift operation and a propulsion force changing operation of the boat 10. The joystick unit 250 is a device for performing the steering operation, the shifting operation, and the propulsion force changing operation of the boat 10.

The display device 260 is, for example, a liquid crystal display, and displays various images (operation images and the like) related to the boat 10. The input device 270 includes, for example, buttons for performing an operation of changing a steering mode or the like.

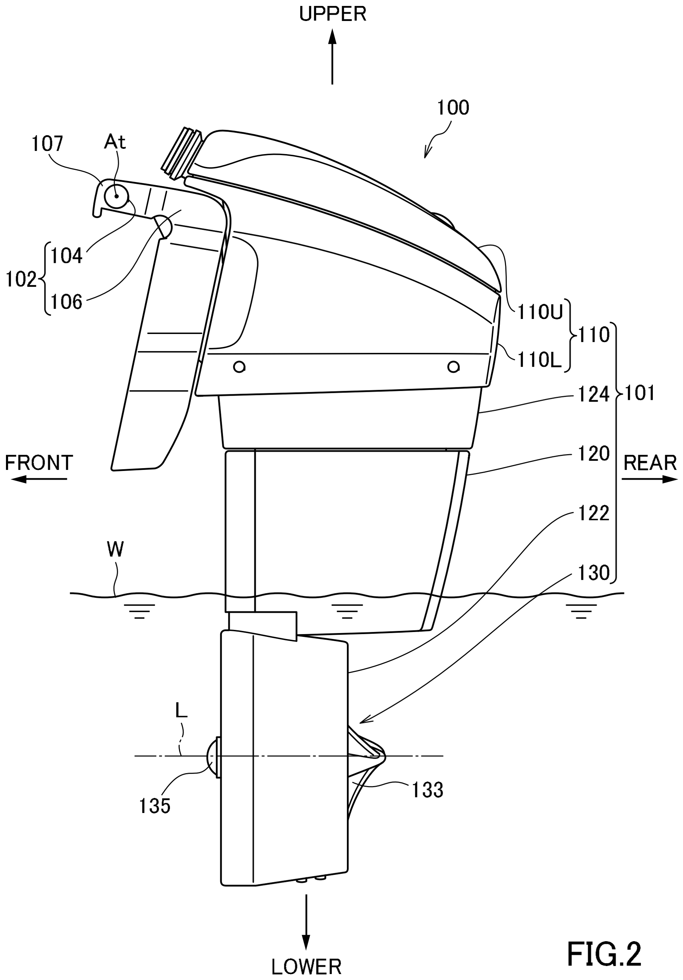

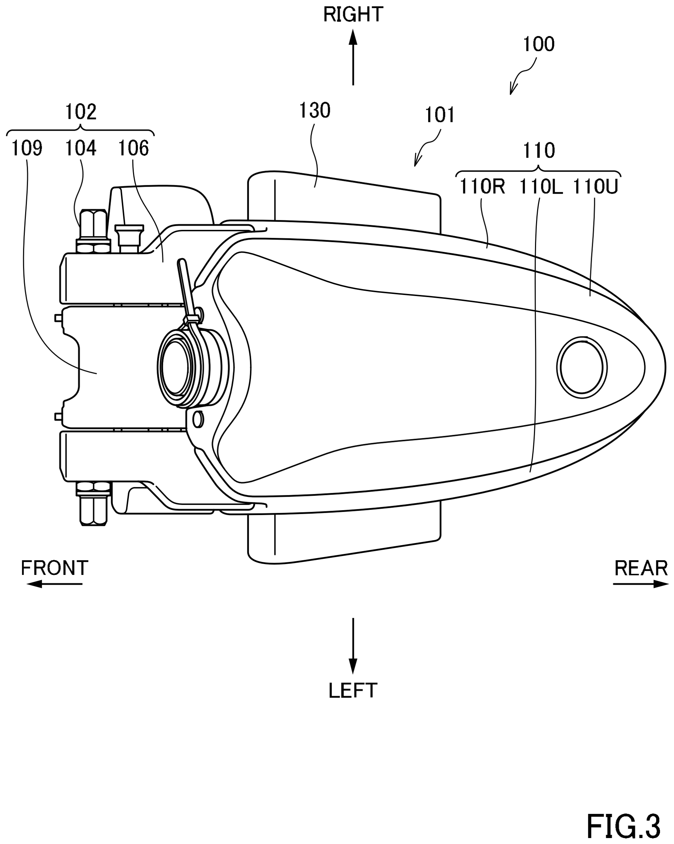

FIG. 2 is a side view illustrating the configuration of the electric propulsion device 100. FIG. 3 is a top view illustrating the configuration of the electric propulsion device 100. The electric propulsion device 100 generates thrust for propelling the boat 10. The electric propulsion device 100 is an electric type and is driven by an electric motor. The electric propulsion device 100 of this embodiment is an outboard motor. Hereinafter, the electric propulsion device 100 in a reference attitude will be described unless otherwise specified. The reference attitude is an attitude of the electric propulsion device 100 when the boat 10 travels (an attitude shown in FIGS. 1 and 2), and is an attitude in which a propeller rotation axis L of a propeller 132 described later extends in the front-rear direction. Each of the front-rear direction, the right-left direction, and the up-down direction is determined based on the electric propulsion device 100 in the reference attitude.

The electric propulsion device 100 is attached to the transom 216 located at a rear portion (stern) of the boat body 200 (see FIG. 1). The electric propulsion device 100 includes a propulsion device main body 101 and a suspension device 102.

The propulsion device main body 101 includes a cowl 110, a middle housing 124, a lower housing 120, a duct 122, and a drive unit 130.

The cowl 110 is located in an upper portion of the electric propulsion device 100. The cowl 110 is a cover that houses various wiring lines and the like. The cowl 110 includes an upper cover 110U, a left cover 110L, and a right cover 110R. The left cover 110L is located on a port side of the propulsion device main body 101. The right cover 110R is located on a starboard side of the propulsion device main body 101. The left cover 110L and the right cover 110R are disposed to face each other horizontally (in the left-right direction). The upper cover 110U is located above the left cover 110L and the right cover 110R. The upper cover 110U covers each of an upper portion of the left cover 110L and an upper portion of the right cover 110R.

The middle housing 124 is positioned below the cowl 110 in the electric propulsion device 100. The middle housing 124 is a cover that houses a steering device (not shown) that controls a steering angle of the boat 10, a steering control unit (not shown) that controls an operation of the steering device, various wiring lines, and the like.

The lower housing 120 is located below the middle housing 124 in the electric propulsion device 100. The lower housing 120 is a cover that houses an MCU 150 to be described later, a sensor 160 to be described later, various wiring lines, and the like. The lower housing 120 is attached to the middle housing 124 to be rotatable about an axis extending in the vertical direction with respect to the middle housing 124. When the lower housing 120 rotates relative to the middle housing 124, the boat 10 is steered.

The duct 122 is located below the lower housing 120 of the electric propulsion device 100. The duct 122 is a tubular body extending in the front-rear direction. The duct 122 is disposed at a position lower than a water surface W in the reference attitude (see FIG. 2). The drive unit 130 is disposed radially inside the duct 122. A stator fin 133 and a bearing 135 are provided radially inside the duct 122 (see FIG. 2). The bearing 135 rotatably supports the propeller 132, which will be described later, about the propeller rotation axis L. The stator fin 133 includes a plurality of (for example, three) fins. The plurality of fins are arranged radially around the bearing 135. The plurality of fins are arranged at equal intervals around the propeller rotation axis L. The plurality of fins are fixed to the duct 122. The plurality of fins are disposed behind the propeller 132 to protrude rearward from the duct 122 (see FIG. 2).

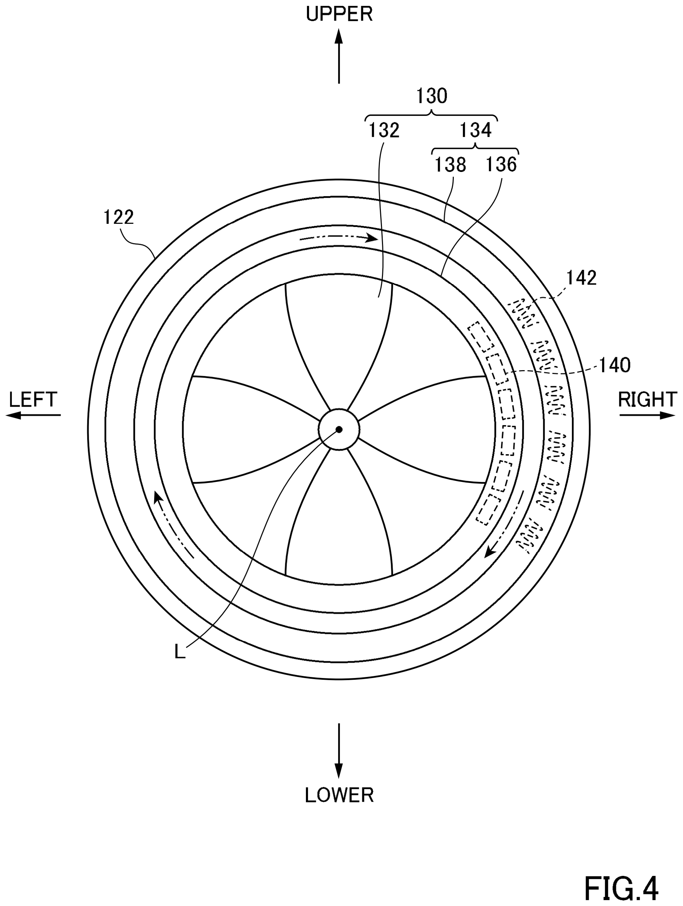

FIG. 4 is an explanatory view illustrating a configuration of the drive unit 130. The drive unit 130 generates thrust for propelling the boat 10. The drive unit 130 includes the propeller 132 and an electric motor 134.

The propeller 132 is a rotating member having a plurality of blades. The propeller 132 generates thrust by rotating. The propeller 132 is positioned radially inside the duct 122. The propeller 132 is rotatable about the propeller rotation axis L parallel to the horizontal direction. The propeller rotation axis L is parallel to a central axis of the duct 122. An entire circumference of the propeller 132 is covered by the duct 122.

The electric motor 134 rotates the propeller 132. The electric motor 134 of this embodiment is a three-phase motor. The electric motor 134 includes a rotor 136 and a stator 138.

The rotor 136 is a tubular body extending in the front-rear direction. The rotor 136 is rotatably supported with respect to the duct 122. The rotor 136 rotates around the propeller rotation axis L with respect to the stator 138. The propeller 132 is disposed radially inward of the rotor 136. The rotor 136 covers the propeller 132 and is connected to the propeller 132. The propeller 132 rotates together with the rotor 136. The rotor 136 includes a plurality of permanent magnets 140. The plurality of permanent magnets 140 are arranged along a rotation direction of the rotor 136. In FIG. 4, only one of the plurality of permanent magnets 140 is denoted by a reference numeral, and reference numerals of the other permanent magnets 140 are omitted.

The stator 138 is a tubular body extending in the front-rear direction. The stator 138 is disposed radially outward of the rotor 136 and covers the rotor 136. The stator 138 faces the rotor 136 in the radial direction of the rotor 136. The stator 138 is coaxial with the rotor 136. The stator 138 is fixed to the duct 122. The stator 138 includes a plurality of coils 142. The plurality of coils 142 are arranged along the rotation direction of the rotor 136. In FIG. 4, only one of the plurality of coils 142 is denoted by a reference numeral, and reference numerals of the other coils 142 are omitted. The plurality of coils 142 include at least one U-phase coil, at least one V-phase coil, and at least one W-phase coil. The U-phase coil, the V-phase coil, and the W-phase coil are alternately arranged along the rotation direction of the rotor 136.

When the plurality of coils 142 are energized, an electromagnetic force for rotating the rotor 136 is generated. With such a configuration, the propeller 132 generates a forward propulsion force when the rotor 136 of the electric motor 134 rotates forward, and generates a backward propulsion force when the rotor 136 of the electric motor 134 rotates backward.

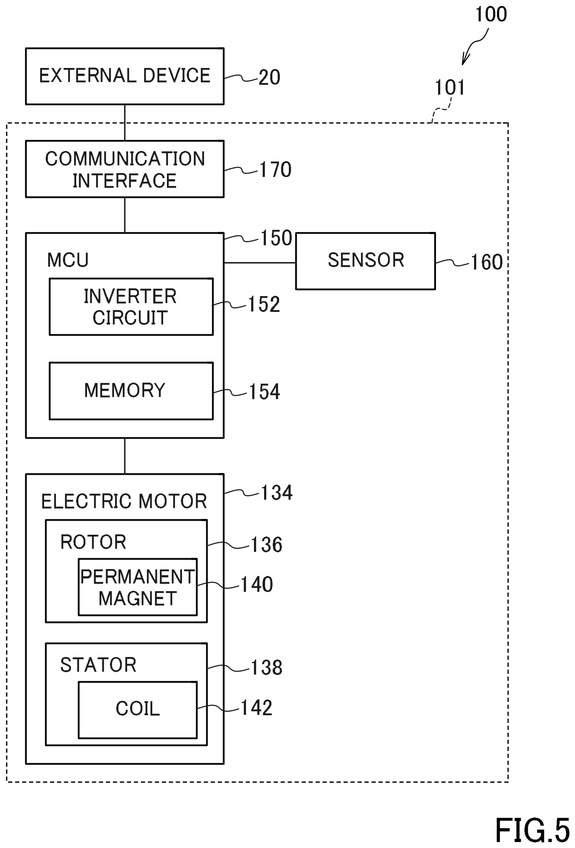

FIG. 5 is a block diagram illustrating a control configuration of the electric propulsion device 100. The propulsion device main body 101 further includes an MCU 150, a sensor 160, and a communication interface 170. The MCU 150 is an example of a controller. The communication interface 170 is an example of a communication device.

The motor control unit (MCU) 150 controls driving of the electric motor 134. The MCU 150 is accommodated in the lower housing 120. The MCU 150 includes an inverter circuit 152 and a memory 154. The MCU 150 further includes, for example, a CPU, a multi-core CPU, a programmable device (a Field Programmable Gate Array (FPGA), a Programmable Logic Device (PLD), or the like).

The inverter circuit 152 is a power supply circuit that supplies electric power to the electric motor 134. The inverter circuit 152 of this embodiment is a three-phase modulation inverter circuit. The inverter circuit 152 converts a direct current supplied from a battery (not shown) into a three-phase alternating current and supplies the three-phase alternating current to the plurality of coils 142 of the electric motor 134. More specifically, the inverter circuit 152 supplies alternating currents to the U-phase coil, the V-phase coil, and the W-phase coil, respectively, such that phases of electrical angles of the alternating currents are shifted from each other by 120 degrees.

The memory 154 is a storage device. The memory 154 of this embodiment is a data rewritable storage device. More specifically, the memory 154 of this embodiment is a programmable read only memory (PROM) which is a data rewritable and nonvolatile storage device. The memory 154 is, for example, an electrically erasable programmable read-only memory (EEPROM). The memory 154 stores correction values of the electrical angles of current flowing through the plurality of coils 142. Specifically, the memory 154 of this embodiment stores current values of the correction values of the electrical angles and initial values of the correction values of the electrical angles. The initial values of the correction values of the electrical angles specifically refer to correction values of the electrical angles at a time of shipment of the electric propulsion device 100.

The sensor 160 measures a rotation speed of the electric motor 134. The sensor 160 of this embodiment is a rotary encoder that converts a rotational motion into an electric signal. The sensor 160 of this embodiment is, for example, a magnetic rotary encoder. The MCU 150 adjusts current to be supplied to the plurality of coils 142 of the electric motor 134 based on the rotation speed of the electric motor 134 measured by the sensor 160, and controls the rotation speed of the electric motor 134.

The communication interface 170 communicates with an external device 20 described later. The MCU 150 receives a signal from the external device 20 and transmits a signal to the external device 20 via the communication interface 170. The communication interface 170 may be a wireless communication interface or a wired communication interface.

The external device 20 receives a user's operation and communicates with the electric propulsion device 100. The external device 20 receives a signal from the MCU 150 and transmits a signal to the MCU 150 via the communication interface 170. The external device 20 is, for example, a personal computer, a smartphone, or a tablet terminal.

The suspension device 102 suspends the propulsion device main body 101 from the boat body 200. The suspension device 102 includes a tilt shaft 104, a pair of left and right clamp brackets 106, and a connection bracket 109.

The pair of left and right clamp brackets 106 are disposed at the rear of the boat body 200 to be spaced apart from each other in the left-right direction. Each of the clamp brackets 106 is fixed to the transom 216 of the boat body 200 by, for example, a bolt. Each of the clamp brackets 106 has a tubular support portion 107 in which a through hole extending in the left-right direction is formed.

The tilt shaft 104 is a rod-shaped member. The tilt shaft 104 is rotatably supported in the through holes of the support portions 107 of the clamp brackets 106. A tilt axis At, which is a centerline of the tilt shaft 104, is an axis in the horizontal direction (left-right direction) in a tilt operation of the electric propulsion device 100.

The connection bracket 109 is disposed to be sandwiched between the pair of clamp brackets 106 in the left-right direction. The connection bracket 109 is supported by the support portions 107 of the clamp brackets 106 via the tilt shaft 104 to pivot about the tilt axis At. The connection bracket 109 is driven to pivot about the tilt axis At with respect to the clamp brackets 106 by a tilt device (not shown) including an actuator, such as a hydraulic cylinder.

When the connection bracket 109 pivots about the tilt axis At with respect to the clamp brackets 106, the propulsion device main body 101 fixed to the connection bracket 109 also pivots about the tilt axis At. Accordingly, a tilt operation is implemented in which the propulsion device main body 101 pivots up and down relative to the boat body 200. By the tilt operation of the electric propulsion device 100, an angle of the propulsion device main body 101 about the tilt axis At is changed in a range from a tilt-down state in which the propeller 132 is positioned in the water (a state in which the electric propulsion device 100 is in the reference attitude: a state shown in FIG. 2) to a tilt-up state in which the propeller 132 is positioned above the water surface W. By the tilt operation of the electric propulsion device 100, a trim operation of adjusting the angle of the propulsion device main body 101 about the tilt axis At to adjust the attitude of the boat 10 during traveling is also executed.

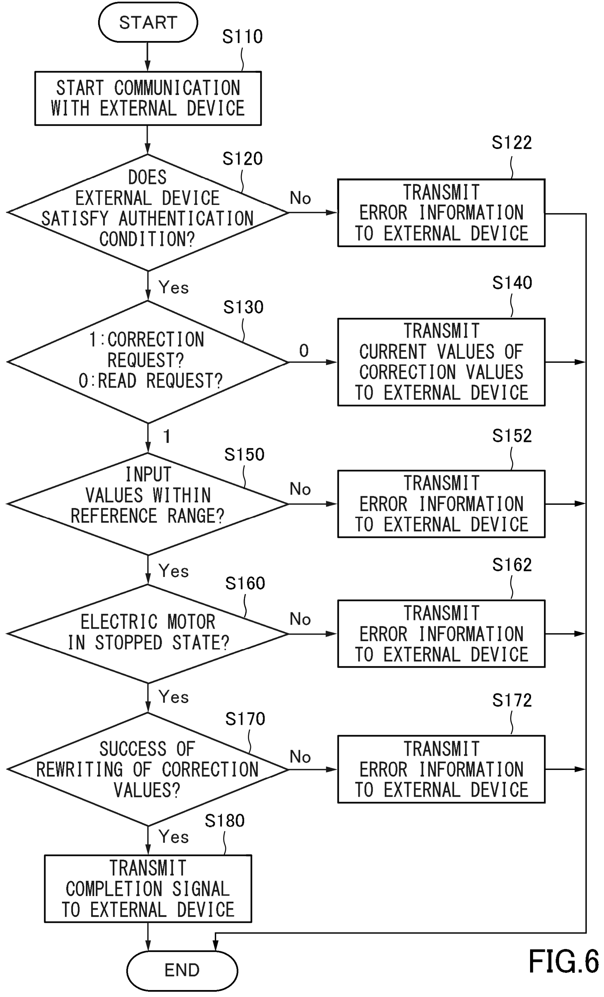

FIG. 6 is a flowchart illustrating a method of rewriting the correction values of the electrical angles. The correction values of the electrical angles are values set to correct deviation of electrical angles of current supplied to the plurality of coils 142, which is caused by, for example, deviation of a mounting position of the sensor 160 or the like. The correction values of the electrical angles are rewritten when the positional relationship between the rotor 136 and the sensor 160 is changed, for example, at a time of replacement of a component of the electric propulsion device 100. By appropriately rewriting the correction values of the electrical angles, performance of the electric motor 134 is maintained or performance of the electric motor 134 is improved. The MCU 150 rewrites the correction values of the electrical angles of the current flowing through the plurality of coils 142 stored in the memory 154 by, for example, a method described below.

First, the MCU 150 starts communication with the external device 20 (S110). The user operates the external device 20 to request the external device 20 to start communication with the MCU 150. At this time, the user requests the external device 20 to start communication with the MCU 150 by using, for example, a dedicated application installed in the external device 20. The external device 20 receives the request from the user and communicates with the MCU 150 via the communication interface 170. The MCU 150 receives the request from the external device 20 via the communication interface 170 and starts communication with the external device 20. The communication between the external device 20 and the MCU 150 may be wireless communication or wired communication.

Next, the MCU 150 determines whether the external device 20 satisfies an authentication condition (S120). The external device 20 transmits authentication information to the MCU 150 via the communication interface 170. The MCU 150 determines whether the external device 20 satisfies the authentication condition based on the authentication information received from the external device 20 via the communication interface 170.

When determining that the external device 20 does not satisfy the authentication condition (S120: No), the MCU 150 transmits error information to the external device 20 via the communication interface 170 (S122). Then, the MCU 150 maintains correction values of electrical angles immediately before the communication with the external device 20 is started, and stops rewriting correction values of electrical angles. That is, the MCU 150 rewrites correction values of electrical angles provided that the external device 20 satisfies the authentication condition.

When determining that the external device 20 satisfies the authentication condition (S120: Yes), the MCU 150 determines whether the request made by the external device 20 is a correction request or a read request (S130). The correction request is issued to rewrite the correction values of the electrical angles of the current flowing through the plurality of coils 142, which are stored in the memory 154. The MCU 150 rewrites the correction values of the electrical angles based on the correction request. The read request is issued to transmit current values of the correction values of the electrical angles stored in the memory 154 to the external device 20. The user makes either the correction request or the read request to the external device 20. The external device 20 transmits the request made by the user to the MCU 150 via the communication interface 170. The MCU 150 receives the request made by the user from the external device 20 via the communication interface 170.

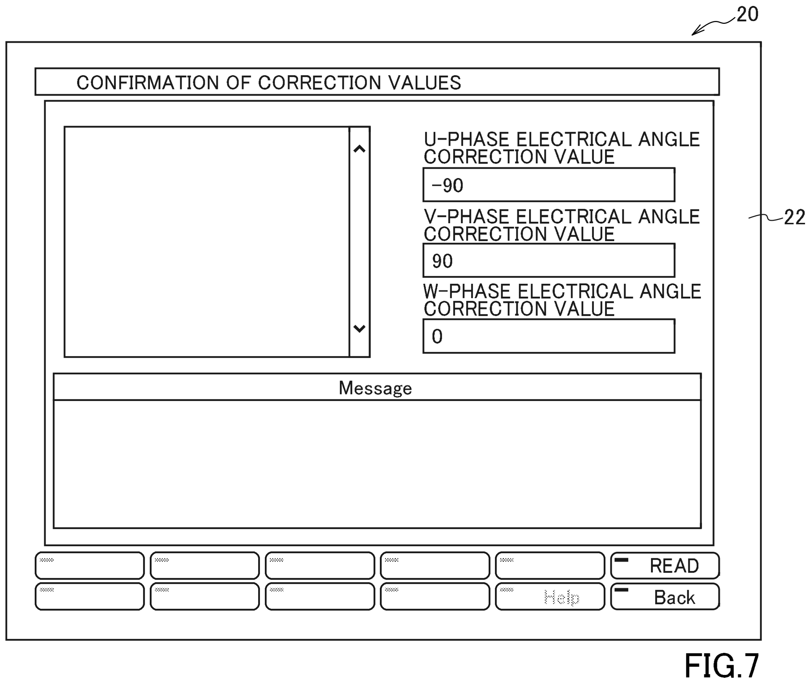

When receiving the read request from the external device 20 via the communication interface 170 (S130: 0), the MCU 150 transmits the current values of the correction values to the external device 20 via the communication interface 170 based on the read request (S140). FIG. 7 is an example of a correction value confirmation screen displayed on the external device 20. When receiving the current values of the correction values from the MCU 150 via the communication interface 170, the external device 20 displays the current values of the correction values on the display section 22 in the external device 20. As shown in FIG. 7, the correction value of the electrical angle of the U-phase coil in the electric motor 134 is displayed in a column of "U-phase electrical angle correction value", the correction value of the electrical angle of the V-phase coil in the electric motor 134 is displayed in a column of "V-phase electrical angle correction value", and the correction value of the electrical angle of the W-phase coil in the electric motor 134 is displayed in a column of "W-phase electrical angle correction value".

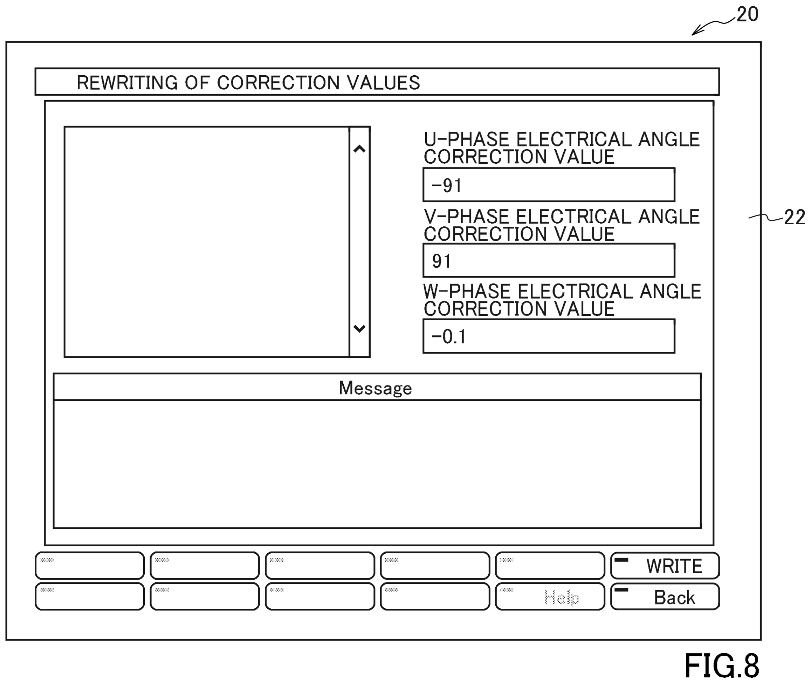

When receiving the correction request from the external device 20 via the communication interface 170 (S130: 1), the MCU 150 determines whether input values entered by the user are within a reference range (S150). FIG. 8 is an example of a correction value rewriting screen displayed on the external device 20. The user enters the correction values of the electrical angles of the U-phase coil, the V-phase coil, and the W-phase coil individually using an input section (not shown) of the external device 20. The input values may be, for example, values to the first decimal place. The external device 20 transmits the values of the electrical angles entered by the user to the MCU 150 via the communication interface 170. The MCU 150 receives the input values entered by the user from the external device 20 via the communication interface 170. The MCU 150 determines whether the input values entered by the user are within a reference range. Specifically, when the input values entered by the user are, for example, -90 degrees or more and 90 degrees or less, the MCU 150 determines that the input values entered by the user are within the reference range.

When it is determined that the input values entered by the user are out of the reference range (S150: No), the MCU 150 transmits error information to the external device 20 (S152). Then, the MCU 150 maintains the correction values of the electrical angles immediately before the correction request is received, and stops rewriting the correction values of the electrical angles. That is, the MCU 150 rewrites the correction values of the electrical angles provided that the input values entered by the user are within the reference range.

When determining that the input values entered by the user are within the reference range (S150: Yes), the MCU 150 determines whether the electric motor 134 is in a stopped state (S160). The MCU 150 receives information on the rotation speed of the electric motor 134 from the sensor 160. The MCU 150 determines whether the electric motor 134 is in the stopped state based on the information on the rotation speed of the electric motor 134 received from the sensor 160. In this embodiment, the MCU 150 determines that the electric motor 134 is in the stopped state when the rotation speed of the electric motor 134 is 0 rpm.

When determining that the electric motor 134 is not in the stopped state (S160: No), the MCU 150 transmits error information to the external device 20 (S162). Then, the MCU 150 maintains the correction values of the electrical angles immediately before the correction request is received, and stops rewriting the correction values of the electrical angles. That is, the MCU 150 rewrites the correction values of the electrical angles provided that the rotation of the electric motor 134 is in the stopped state.

When determining that the electric motor 134 is in the stopped state (S160: Yes), the MCU 150 determines whether rewriting of the correction values of the electrical angles stored in the memory 154 has been successfully performed (S170). The MCU 150 rewrites the correction values of the electrical angles stored in the memory 154 based on the input values entered by the user. When the rewriting of the correction values of the electrical angles has been successfully performed (S170: Yes), the MCU 150 transmits a completion signal to the external device 20 (S180). The completion signal indicates that the correction values of the electrical angles stored in the memory 154 have been successfully rewritten. The external device 20 receives the completion signal from the MCU 150 via the communication interface 170. The external device 20 displays that the rewriting of the correction values of the electrical angles has been successfully performed on the display section 22 to notify the user that the rewriting of the correction values of the electrical angles has been successfully performed.

When the rewriting of the correction values of the electrical angles has failed (S170: No), the MCU 150 transmits error information to the external device 20 (S172). Then, the MCU 150 maintains the correction values of the electrical angles immediately before the correction request is received, and stops rewriting the correction values of the electrical angles.

When the rewriting of the correction values of the electrical angles is stopped, the MCU 150 transmits different signals for different causes of the stop to the external device 20. For example, the MCU 150 transmits different error information items to the external device 20 when determining the external device 20 is not satisfied the authentication condition, when determining the input values entered by the user are out of the reference range, when determining the electric motor 134 is not in the stopped state, and when the writing to the memory 154 fails.

As described herein above, the electric propulsion device 100 according to this embodiment includes the propeller 132, the electric motor 134, the MCU 150, and the communication interface 170. The electric motor 134 rotates the propeller 132. The electric motor 134 includes the rotor 136 which includes the permanent magnets 140, and the stator 138 which includes the plurality of coils 142 arranged along the rotation direction of the rotor 136 and which faces the rotor 136 in the radial direction of the rotor 136. The MCU 150 controls the driving of the electric motor 134. The MCU 150 includes the memory 154. The communication interface 170 communicates with the external device 20. The MCU 150 receives a correction request from the external device 20 via the communication interface 170, and rewrites the correction values of the electrical angles of the current flowing through the plurality of coils 142 stored in the memory 154 based on the correction request. According to the electric propulsion device 100 of this embodiment, the correction values of the electrical angles of the electric motor 134 can be rewritten by a relatively simple method.

In the electric propulsion device 100 of this embodiment, the MCU 150 rewrites the correction values provided that the external device 20 satisfies the authentication condition. According to the electric propulsion device 100 of this embodiment, the correction values of the electrical angles of the electric motor 134 are prevented from being rewritten by a tool other than a dedicated tool.

In the electric propulsion device 100 according to this embodiment, the MCU 150 rewrites the correction values provided that the rotation of the electric motor 134 is in the stopped state. According to the electric propulsion device 100 of this embodiment, a malfunction of the electric motor 134 during operation of the electric motor 134 is suppressed.

In the electric propulsion device 100 of this embodiment, the MCU 150 transmits a completion signal to the external device 20 when the correction values are rewritten. According to the electric propulsion device 100 of this embodiment, it is easy for the user to confirm that the rewriting the correction values of the electrical angles of the electric motor 134 is completed.

In the electric propulsion device 100 of this embodiment, the MCU 150 receives the input values entered by the user from the external device 20, and rewrites the correction values based on the input values. According to the electric propulsion device 100 of this embodiment, the correction values of the electrical angles of the electric motor 134 can be rewritten by a relatively simple method.

In the electric propulsion device 100 of this embodiment, when the input values are out of the reference range, the MCU 150 maintains the correction values immediately before the correction request is received. According to the electric propulsion device 100 of this embodiment, the accuracy of the correction values of the electrical angles after the completion of rewriting is improved.

In the electric propulsion device 100 of this embodiment, when the rewriting of the correction values is stopped, the MCU 150 transmits different signals for different causes of the stop to the external device 20. According to the electric propulsion device 100 of this embodiment, when the rewriting the correction values of the electrical angles is stopped, it is easy for the user to confirm a cause of the stop of the rewriting the correction values of the electrical angles.

In the electric propulsion device 100 of this embodiment, the memory 154 stores the initial values of the correction values. According to the electric propulsion device 100 of this embodiment, deterioration in the performance of the electric motor 134 when the rewriting of the correction values of the electrical angles is stopped is suppressed.

In the electric propulsion device 100 according to this embodiment, the MCU 150 receives a read request from the external device 20 via the communication interface 170 and transmits the current values of the correction values stored in the memory 154 to the external device 20 based on the read request. According to the electric propulsion device 100 of this embodiment, the user can easily check the current values of the correction values of the electrical angles.

The electric propulsion device 100 according to this embodiment further includes the sensor 160 that detects positions of the coils 142. According to the electric propulsion device 100 of this embodiment, the correction values of the electrical angles of the electric motor 134 can be rewritten by a relatively simple method.

In the electric propulsion device 100 of this embodiment, the rotor 136 is a tubular body and includes the plurality of permanent magnets 140 arranged along the rotation direction of the rotor 136, and the stator 138 is a tubular body and covers the rotor 136. According to the electric propulsion device 100 of this embodiment, the correction values of the electrical angles of the electric motor 134 can be rewritten by a relatively simple method.

In the electric propulsion device 100 of this embodiment, the rotor 136 covers the propeller 132 and is connected to the propeller 132. According to the electric propulsion device 100 of this embodiment, the correction values of the electrical angles of the electric motor 134 can be rewritten by a relatively simple method.

The boat 10 of this embodiment includes the boat body 200 and the electric propulsion device 100 attached to the rear portion of the boat body 200. According to the boat 10 of this embodiment, the correction values of the electrical angles of the electric motor 134 can be rewritten by a relatively simple method.

The electric propulsion device 100 according to this embodiment includes the electric motor 134, the MCU 150, and the communication interface 170. The electric motor 134 includes the rotor 136 which includes the permanent magnets 140, and the stator 138 which includes the plurality of coils 142 arranged along the rotation direction of the rotor 136 and which faces the rotor 136 in the radial direction of the rotor 136. The MCU 150 controls the driving of the electric motor 134. The MCU 150 includes the memory 154. The communication interface 170 communicates with the external device 20. The MCU 150 receives a correction request from the external device 20 via the communication interface 170, and rewrites the correction values of the electrical angles of the current flowing through the plurality of coils 142 stored in the memory 154 based on the correction request. According to the electric propulsion device 100 of this embodiment, the correction values of the electrical angles of the electric motor 134 can be rewritten by a relatively simple method.

### Modifications

The technology disclosed in this specification is not limited to the embodiment described above but can be modified in various forms without departing from the gist of this specification, and for example, the following modifications can be made.

The configurations of the boat 10 and the electric propulsion device 100 according to the above-described embodiment are merely examples and can be modified in various ways. For example, in the above-described embodiment, the electric propulsion device 100, which is an outboard motor, is exemplified as the boat propulsion device. However, the boat propulsion device may be, for example, an inboard motor, an inboard/outboard motor, or the like.

In the above-described embodiment, the electric propulsion device 100 includes only the electric motor 134 as a drive source. However, the boat propulsion device may be a hybrid type having an engine in addition to the electric motor.

In the above-described embodiment, the electric propulsion device 100 employs a so-called rim drive system in which the propeller 132 is rotated by connecting the rotor 136 of the electric motor 134 to the propeller 132. However, the present disclosure is not necessarily limited to this. For example, the boat propulsion device may be of a drive type in which rotation of an electric motor is transmitted to a propeller using a shaft to rotate the propeller.

The controller may not necessarily require the external device to satisfy the authentication condition when rewriting the correction values of the electrical angles. Similarly, when the controller rewrites the correction values of the electrical angles, it is not necessarily required that the rotation of the electric motor is in the stopped state.

In the above-described embodiment, the MCU 150 determines that the electric motor 134 is in the stopped state when the rotation speed of the electric motor 134 is 0 rpm, but the present disclosure is not necessarily limited to this. For example, the controller may determine that the electric motor is in the stopped state when the rotation speed of the electric motor is equal to or lower than a predetermined threshold value.

## Claims

1. A boat propulsion device comprising:
an electric motor (134) including
a rotor (136) including permanent magnets (140), and
a stator (138) that includes a plurality of coils (142) arranged along a rotation direction of the rotor (136) and that faces the rotor (136) in a radial direction of the rotor (136);
a controller (150) that controls driving of the electric motor (134) and that includes a memory (154); and
a communication device (170) that communicates with an external device (20), wherein
the controller (150) receives a correction request from the external device (20) via the communication device (170), and rewrites correction values of electrical angles of current flowing through the plurality of coils (142), which are stored in the memory (154), based on the correction request.

2. The boat propulsion device according to claim 1, further comprising:
a propeller (132), wherein
the electric motor (134) rotates the propeller (132).

3. The boat propulsion device according to claim 1 or 2, wherein the controller (150) rewrites the correction values provided that the external device (20) satisfies an authentication condition.

4. The boat propulsion device according to any one of claims 1 to 3, wherein
the controller (150) rewrites the correction values provided that rotation of the electric motor (134) is in a stopped state.

5. The boat propulsion device according to any one of claims 1 to 4, wherein
the controller (150) transmits a completion signal to the external device (20) when the correction values are rewritten.

6. The boat propulsion device according to any one of claims 1 to 5, wherein
the controller (150) receives input values entered by a user from the external device (20), and rewrites the correction values based on the input values.

7. The boat propulsion device according to claim 6, wherein
when the input values are out of a reference range, the controller (150) maintains the correction values immediately before the correction request is received.

8. The boat propulsion device according to any one of claims 1 to 7, wherein
when the rewriting of the correction values is stopped, the controller (150) transmits different signals for different causes of the stop to the external device (20).

9. The boat propulsion device according to any one of claims 1 to 8, wherein
the memory (154) stores initial values of the correction values.

10. The boat propulsion device according to any one of claims 1 to 9, wherein
the controller (150) receives a read request from the external device (20) via the communication device (170), and transmits current values of the correction values stored in the memory (154) to the external device (20) based on the read request.

11. The boat propulsion device according to any one of claims 1 to 10, further comprising:
a sensor (160) that detects positions of the coils (142).

12. The boat propulsion device according to any one of claims 1 to 11, wherein
the rotor (136) is a tubular body and includes the plurality of permanent magnets (140) arranged along the rotation direction of the rotor (136), and
the stator (138) is a tubular body and covers the rotor (136).

13. The boat propulsion device according to claim 12, wherein
the rotor (136) covers the propeller (132) and is connected to the propeller (132).

14. A boat comprising:
a boat body (200); and
the boat propulsion device (100) according to any one of claims 1 to 13, which is attached to a rear portion of the boat body (200).
